(19) Europäisches Patentamt
European Patent Office
Office européen des brevets

(11)  EP 2 810 022 B1

(12)  EUROPÄISCHE PATENTSCHRIFT

(45) Veröffentlichungstag und Bekanntmachung des Hinweises auf die Patenterteilung:
17.05.2017  Patentblatt 2017/20

(51) Int Cl.:
*G01D 5/02* (2006.01)

(21) Anmeldenummer: 13703370.0

(22) Anmeldetag: 01.02.2013

(86) Internationale Anmeldenummer:
PCT/EP2013/052074

(87) Internationale Veröffentlichungsnummer:
WO 2013/113896 (08.08.2013 Gazette 2013/32)

(54) **BEDIENVORRICHTUNG UND VERFAHREN ZUM BETRIEB EINER BEDIENVORRICHTUNG**

CONTROL DEVICE AND METHOD FOR OPERATING A CONTROL DEVICE

DISPOSITIF DE COMMANDE ET SON PROCÉDÉ D'UTILISATION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **02.02.2012  DE 102012201498**

(43) Veröffentlichungstag der Anmeldung:
**10.12.2014  Patentblatt 2014/50**

(73) Patentinhaber: **Robert Bosch GmbH**
**70442 Stuttgart (DE)**

(72) Erfinder:
• **WEGELIN, Frederik**
  **72762 Reutlingen (DE)**
• **LAMMEL, Gerhard**
  **72070 Tuebingen (DE)**
• **FOERSTER, Martina**
  **72768 Reutlingen (DE)**

(56) Entgegenhaltungen:
WO-A1-2006/090197    WO-A1-2010/113608
JP-A- 2006 348 513    JP-A- 2008 277 213
JP-A- 2011 059 891    US-A- 5 854 622
US-B1- 6 580 415

Bemerkungen:
Die Akte enthält technische Angaben, die nach dem Eingang der Anmeldung eingereicht wurden und die nicht in dieser Patentschrift enthalten sind.

**Beschreibung**

Stand der Technik

Die Erfindung geht aus von einer Bedienvorrichtung nach dem Oberbegriff des Anspruchs 1.

Solche Bedienvorrichtungen sind allgemein bekannt. Eine Ausführungsform einer verwandten Bedienvorrichtung ist beispielsweise in der Druckschrift JP 2008 277213 A beschrieben, in der Sensoren zur Detektion einer Beschleunigung und Drehbewegung an einem Hebel offenbart werden. Des Weiteren ist beispielsweise aus der Druckschrift EP 0 842 822 A2 ein Bedienknopf bekannt, der ein gegenüber einem Gehäuse verdrehbares Betätigungselement aufweist. Derartige Drehknöpfe werden beispielsweise bei Autoradios oder dergleichen verwendet. Üblicherweise ist das Betätigungselement mechanisch mit einem Potentiometer gekoppelt, wobei die Drehstellung des Drehknopfes durch das Potentiometer in einen entsprechendes elektrisches Signal umgewandelt wird, um beispielsweise die Lautstärke des Autoradios mit Hilfe des Drehknopfes einzustellen. Nachteilig ist, dass Potentiometer Schleifkontakte aufweisen, welche sich im Laufe der Zeit abnutzen.

Offenbarung der Erfindung

Die erfindungsgemäße Bedienvorrichtung und das erfindungsgemäße Verfahren zum Betrieb einer Bedienvorrichtung gemäß den nebengeordneten Ansprüchen haben gegenüber dem Stand der Technik den Vorteil, dass einerseits keine sich abnutzenden Schleifkontakte benötigt werden und andererseits eine vergleichsweise kostengünstige und stromsparende Bedienvorrichtung realisiert wird. Diese Vorteile werden durch die Verwendung des Beschleunigungssensors, als Sensoreinheit erzielt, da der Beschleunigungssensor ein vergleichsweise preisgünstiges, kompaktes und stromsparendes Bauteil ist, welches praktisch keinen Verschleißerscheinungen unterliegt. Bei der Verwendung des Beschleunigungssensors wird zudem ein geringerer Kraftaufwand zur Verdrehung des Betätigungselements benötigt, so dass ein komfortableres Bedienen ermöglicht wird. Zudem ermöglicht der Beschleunigungssensor eine präzisere Vermessung der Drehbewegung des Betätigungselements gegenüber dem Basiselement. Auf diese Weise ist insbesondere eine Bedienung des elektrischen und/oder elektronischen Geräts, beispielsweise ein Audiogerät, Computer, Kommunikationsgerät, Navigationsgerät, elektronisches Fahrzeugbediensystem oder dergleichen, möglich, wobei Sensorsignale des Beschleunigungssensors als Steuerungssignale für das elektrische und/oder elektronische Gerät verwendet werden. Der Beschleunigungssensor umfasst insbesondere einen als MEMS-Bauteil (Micro-Electro-Mechanical System) ausgeführten mikromechanischen Beschleunigungssensor, welcher in einem Standardhalbleiterherstellungsprozess hergestellt ist. Der Beschleunigungssensor weist vorzugsweise ein Substrat, insbesondere ein Silizium-Substrat, und eine gegenüber dem Substrat mittels Federn beweglich aufgehängte seismische Masse auf. Bei einer auf den Sensor wirkenden äußeren Beschleunigung wird die seismische Masse gegenüber dem Substrat aufgrund von Trägheitskräften ausgelenkt, wobei die Auslenkung kapazitiv ausgewertet. Insbesondere wird eine durch die Auslenkung hervorgerufene Kapazitätsänderung zwischen substratfesten Festelektroden und korrespondierenden Gegenelektroden der seismischen Masse in ein der Auslenkung proportionales Sensorsignal gewandelt.

Vorteilhafte Ausgestaltungen und Weiterbildungen der Erfindung sind den Unteransprüchen, sowie der Beschreibung unter Bezugnahme auf die Zeichnungen entnehmbar.

Erfindungsgemäß ist es dabei vorgesehen, dass der Beschleunigungssensor einen wenigstens zweiachsigen Beschleunigungssensor umfasst, dessen Sensierachsen in einer zur Betätigungsachse senkrechten Sensierebene verlaufen, wobei die Sensierebene zumindest im Anwendungsfall der Bedienvorrichtung im Wesentlichen parallel zum Schwerefeld verläuft. Der Beschleunigungssensor misst dann insbesondere die Richtung des Schwerefeldes der Erde innerhalb der Sensierebene. Bei einer Drehung des Betätigungselements dreht sich nur die Sensierebene, während die Ausrichtung des Schwerefelds stets gleich bleibt. Die Drehung des Betätigungselements wird dadurch registriert, dass die Richtung des Schwerefelds im Bezugssystem des Beschleunigungssystems (und innerhalb der Sensierebene) um die Betätigungsachse wandert.

Die Betätigungsachse verläuft hinsichtlich der Sensierebene vorzugsweise im Wesentlichen zentral durch den Beschleunigungssensor, so dass bei einer Drehung des Betätigungselements von den zwei Messachsen des Beschleunigungssensors hinsichtlich der Betätigungsachse symmetrische Sensorsignale erzeugt werden.

Erfindungsgemäß ist es dabei vorgesehen, dass der wenigstens zweiachsige Beschleunigungssensor zur Messung der Schwerebeschleunigung während der Drehung des Betätigungselements konfiguriert ist, wobei die Bedienvorrichtung eine mit dem Beschleunigungssensor gekoppelte Auswerteeinheit aufweist, die zur Bestimmung der Drehung des Betätigungselements relativ zur Richtung der Schwerebeschleunigung konfiguriert ist.

Vorzugsweise wird der Drehwinkel $\varphi$, um welchen das Betätigungselement um die Betätigungsachse gedreht wird, mittels der Auswerteeinheit über eine Arkustangens-Funktion und/oder die Funktion "atan2(x,y)" berechnet, wobei "x" und "y" die beiden Messachsen des zweiachsigen Beschleunigungssensors bezeichnen. Hierbei werden die kartesischen Koordinaten (x', y') des zweiachsigen Beschleunigungssensors in Polarkoordinaten umgerechnet, so dass

unmittelbar der Drehwinkeln φ zu bestimmen ist. Die Funktion "atan2(x,y)" berechnet dabei den Drehwinkel φ, dessen Tangens der Quotient aus "x" und "y" ist, wobei insbesondere gilt:

$$atan2(x,y) := \begin{cases} \arctan\left(\frac{x}{y}\right) & \text{für } x > 0 \\ \arctan\left(\frac{x}{y} + \pi\right) & \text{für } x < 0, y \geq 0 \\ \arctan\left(\frac{x}{y} - \pi\right) & \text{für } x < 0, y < 0 \\ +\frac{\pi}{2} & \text{für } x = 0, y > 0 \\ -\frac{\pi}{2} & \text{für } x = 0, y < 0 \\ 0 & \text{für } x = 0, y = 0 \end{cases}$$

Vorteilhafterweise ermöglicht die Funktion "atan2(x, y)" dabei die Berechnung des Drehwinkels φ im entsprechenden Quadranten.

Gemäß einer bevorzugten Ausführungsform ist vorgesehen, dass die Auswerteeinheit einen Tiefpassfilter zum Filtern von Sensorsignalen des Beschleunigungssensors aufweist. In vorteilhafter Weise wird die Bedienvorrichtung somit robust gegenüber Vibrationen. Alternativ ist auch denkbar, dass der Tiefpassfilter direkt in den Beschleunigungssensor integriert ist.

Gemäß einer bevorzugten Ausführungsform ist vorgesehen, dass das Betätigungselement parallel zur Betätigungsachse gegenüber dem Basiselement manuell translatorisch bewegbar ist und der Beschleunigungssensor einen dreiachsigen Beschleunigungssensor umfasst, wobei mittels einer zur Sensierebene senkrechten weiteren Sensierachse des Beschleunigungssensors eine Beschleunigung des Betätigungselements parallel zur Betätigungsachse detektierbar ist. In vorteilhafter Weise wird durch eine translatorische Bewegung eine zusätzliche Bedienfunktionalität geschaffen, welche ebenfalls mit dem Beschleunigungssensor, welcher hier dreiachsig ausgebildet ist, detektierbar ist. Die Bedienvorrichtung fungiert hierbei vorzugsweise sowohl als Drehknopf, als auch als Drückschalter.

Gemäß einer bevorzugten Ausführungsform ist vorgesehen, dass das Betätigungselement um eine zur Betätigungsachse und zum Schwerefeld jeweils im Wesentlichen senkrecht verlaufende Kippachse gegenüber dem Basiselement manuell verkippbar ist, wobei der Beschleunigungssensor einen dreiachsigen Beschleunigungssensor zur Vermessung einer Kippbewegung des Betätigungselements um die Kippachse umfasst. In vorteilhafter Weise wird durch eine Kippbewegung weitere zusätzliche Bedienfunktionalitäten geschaffen, welche ebenfalls mit dem Beschleunigungssensor, welcher hier wiederum dreiachsig ausgebildet ist, detektierbar ist. Die Bedienvorrichtung fungiert hierbei vorzugsweise sowohl als Drehknopf, als auch als Kippschalter. Denkbar ist, dass die Bedienvorrichtung ferner als Drückschalter fungiert und das Betätigungselement translatorisch verschiebbar ist.

Ein weiterer Gegenstand der vorliegenden Erfindung ist ein Verfahren zum Betrieb einer Bedienvorrichtung, wobei eine Drehung des Betätigungselements um die Betätigungsachse vom Beschleunigungssensor detektiert wird. Insbesondere wird in Abhängigkeit der detektierten Drehung ein der Drehung proportionales Sensorsignal erzeugt, welches zur Steuerung des elektrischen und/oder elektronischen Geräts verwendet wird. In vorteilhafter Weise wird die Drehung allein in Abhängigkeit der Sensorsignal des Beschleunigungssensors detektiert und quantifiziert, so dass keine sich abnutzenden Schleifkontakte benötigt werden und eine vergleichsweise kostengünstige und stromsparende Bedienvorrichtung realisierbar ist.

Gemäß einer bevorzugten Ausführungsform ist vorgesehen, dass mittels des Beschleunigungssensors die Schwerebeschleunigung gemessen wird und wobei mittels einer Auswerteeinheit die Orientierung des Betätigungselements relativ zur Richtung der Schwerebeschleunigung bestimmt wird. Hierfür wird vorzugsweise der Drehwinkel φ, um welchen das Betätigungselement um die Betätigungsachse gedreht wird, mittels der Auswerteeinheit über eine Arkustangens-Funktion und/oder die Funktion "atan2(x,y)" berechnet, wobei "x" und "y" die beiden Messachsen des zweiachsigen Beschleunigungssensors bezeichnen. Die kartesischen Koordinaten (x', y') des zweiachsigen Beschleunigungssensors werden insbesondere in Polarkoordinaten umgerechnet, so dass unmittelbar der Drehwinkeln φ zu bestimmen ist.

Gemäß einer bevorzugten Ausführungsform ist vorgesehen, dass mittels des Beschleunigungssensors eine translatorische Bewegung des Betätigungselements parallel zur Betätigungsachse gemessen wird und/oder wobei mittels des Beschleunigungssensors eine Kippbewegung des Betätigungselements um eine zur Betätigungsachse und zur Schwerebeschleunigung jeweils senkrechte Kippachse gemessen wird. Vorzugsweise werden somit zusätzliche Bedienfunktionalitäten realisiert, ohne dass zusätzliche Sensoreinheiten benötigt werden.

Ausführungsbeispiele der vorliegenden Erfindung sind in den Zeichnungen dargestellt und in der nachfolgenden Beschreibung näher erläutert.

Kurze Beschreibung der Zeichnungen

Es zeigen

**Figur 1** eine schematische Ansicht einer Bedienvorrichtung gemäß einer ersten Ausführungsform der vorliegenden Erfindung,
**Figur 2** eine schematische Ansicht einer Bedienvorrichtung gemäß einer zweiten Ausführungsform der vorliegenden Erfindung und
**Figur 3** eine schematische Ansicht einer Bedienvorrichtung gemäß einer dritten Ausführungsform der vorliegenden Erfindung.

Ausführungsformen der Erfindung

In den verschiedenen Figuren sind gleiche Teile stets mit den gleichen Bezugszeichen versehen und werden daher in der Regel auch jeweils nur einmal benannt bzw. erwähnt.

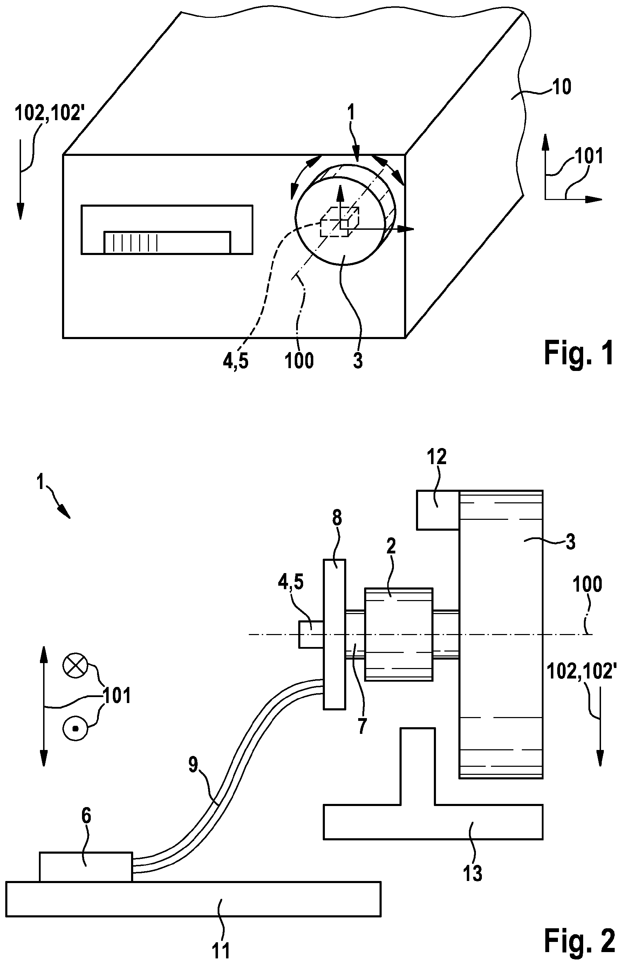

In **Figur 1** ist eine schematische Ansicht einer Bedienvorrichtung 1 gemäß einer ersten Ausführungsform der vorliegenden Erfindung dargestellt. Die Bedienvorrichtung 1 weist ein durch einen Benutzer von Hand zu bedienendes Betätigungselement 3 auf, welches gegenüber einem als Gleitlager ausgebildeten Basiselement 2 um eine Betätigungsachse 100 drehbar ist. Das Betätigungselement 3 ist über eine Achse 7 drehfest mit einer Platine 8 gekoppelt, wobei auf der Platine 8 eine Sensoreinheit 4 in Form eines wenigstens zweiachsigen mikromechanischen Beschleunigungssensors 5 angeordnet ist. Der Beschleunigungssensor 5 ist über die Platine 8 und eine flexible elektrische Leitung 9, beispielsweise eine Flexband-Leitung, mit einer Auswerteeinheit 6 gekoppelt, wobei die Auswerteeinheit 6 auf einer Geräteplatine 11 angeordnet ist. Die Bedienvorrichtung 1 dient insbesondere zur Bedienung bzw. Steuerung eines elektrischen und/oder elektrischen Geräts (nicht abgebildet). Das Betätigungselement 3 weist zudem einen Anschlag 12 auf, welcher mit einem feststehenden Gegenanschlag 13 zusammenwirkt, um die Drehung des Betätigungselements 3 gegenüber dem Basiselement 2 auf ein definiertes Maximalmaß, beispielsweise 270 Grad, zu begrenzen. Auf diese Weise wird ferner ein Abreißen der Leitung 9 verhindert. Das Gleitlager weist vorzugsweise eine gewisse Reibung auf, um ein für den Benutzer haptisch angenehmes Drehen zu realisieren und dem Benutzer das Gefühl zu vermitteln, dass ein versehentliches Verrutschen der Dreheinstellung des Betätigungselements nicht möglich ist.
Der Beschleunigungssensor 5 ist derart angeordnet, dass eine durch die zwei Messachsen des Beschleunigungssensors 5 aufgespannte Sensierebene 101 im Wesentlichen parallel zum Schwerefeld 102 und senkrecht zur Betätigungsachse 100 verläuft. Am Beschleunigungssensor 5 liegt nun ständig die Erdbeschleunigung (1g) 102' an, deren Richtung von dem Beschleunigungssensor 5 gemessen wird. Bei einer Drehung des Betätigungselements 3 dreht sich der Beschleunigungssensor 5 mit, so dass aus Sicht des Beschleunigungssensors 5 die Richtung der Erdbeschleunigung 102' in der Sensierebene 101 um die Betätigungsachse 100 wandert. Die entsprechenden Sensorsignale bezüglich der zwei Messachsen werden von der Auswerteeinheit 6 von kartesischen Koordinanten in Polarkoordinaten umgerechnet, so dass ein Drehwinkel $\varphi$, um den das Betätigungselement 3 gedreht wurde, zu bestimmen ist. In Ab-hängigkeit dieses Drehwinkels $\varphi$ wird dann insbesondere ein Steuerungssignal zur Steuerung des elektrischen und/oder elektrischen Geräts erzeugt. Das elektrische und/oder elektronische Gerät umfasst beispielsweise ein Audiogerät, Computer, Kommunikationsgerät, Navigationsgerät, elektronisches Fahrzeugbediensystem oder dergleichen. Die Berechnung der Polarkoordinaten erfolgt vorzugsweise mittels der Funktion "atan2(x,y)", wobei "x" und "y" die beiden Messachsen bezeichnen. Die Funktion "atan2(x,y)" berechnet dabei den Drehwinkel $\varphi$, dessen Tangens der Quotient aus "x" und "y" ist, wobei insbesondere gilt:

$$atan2(x,y) := \begin{cases} \arctan\left(\frac{x}{y}\right) & \text{für } x > 0 \\ \arctan\left(\frac{x}{y} + \pi\right) & \text{für } x < 0, y \geq 0 \\ \arctan\left(\frac{x}{y} - \pi\right) & \text{für } x < 0, y < 0 \\ +\frac{\pi}{2} & \text{für } x = 0, y > 0 \\ -\frac{\pi}{2} & \text{für } x = 0, y < 0 \\ 0 & \text{für } x = 0, y = 0 \end{cases}$$

Um die Bedienanordnung 1 gegen Vibrationen unempfindlich zu machen, ist entweder im Beschleunigungssensor 5 selbst oder in der Auswerteeinheit 6 ein Tiefpass angeordnet. Hierdurch wird vorteilhafterweise auch das Rauschen im Sensorsignal reduziert. Um ein unerwünschtes "Zappeln" der Einstellung zwischen benachbarten Werten zu verhindern, kann auch eine Hystereseschwelle in der Auswerteeinheit 6 realisiert sein, so dass eine Änderung der Einstellung erst ab einem bestimmten Betrag wirksam wird. Mit anderen Worten: Die Änderung der Sensorsignale müssen einen bestimmten Betrag überschreiten, damit diese Änderungen auch im Steuersignal berücksichtigt werden.

In **Figur 2** eine schematische Ansicht einer Bedienvorrichtung 1 gemäß einer zweiten Ausführungsform der vorliegenden Erfindung dargestellt. Die zweite Ausführungsform entspricht im Wesentlichen der in Figur 1 illustrierten ersten Ausführungsform, wobei bei der zweiten Ausführungsform im Unterschied zur ersten Ausführungsform ein dreiachsiger Beschleunigungssensor 5 als Sensoreinheit 4 realisiert ist. Zudem ist das Betätigungselement 3 gegenüber dem Basiselement 2 entlang der Betätigungsachse 100, insbesondere entgegen einer Federkraft oder der Elastizität des Aufbaus, zusätzlich noch verschiebbar. Die zusätzliche dritte Messachse verläuft ebenfalls parallel zur Betätigungsachse 100, so dass eine Beschleunigung des Betätigungselements 3 entlang der Betätigungsachse 100 ein entsprechendes zusätzliches Sensorsignal erzeugt. Dieses zusätzliche Sensorsignal wird ebenfalls zur Steuerung des elektrischen und/oder elektronischen Gerätes verwendet. Denkbar ist, dass hierdurch ein Tap-Signal erzeugt wird. Das entsprechende zusätzliche Sensorsignal wird insbesondere vor dem Tiefpassfilter und/oder der Hystereseschwellwert-Filterung ausgewertet. Denkbar ist, dass hierfür eine in den Beschleunigungssensor 5 integrierte Interrupt-Funktionalität Verwendung findet, die ein Interrupt erzeugt bzw. ausgibt, wenn ein Schwellwert überschritten wurde.

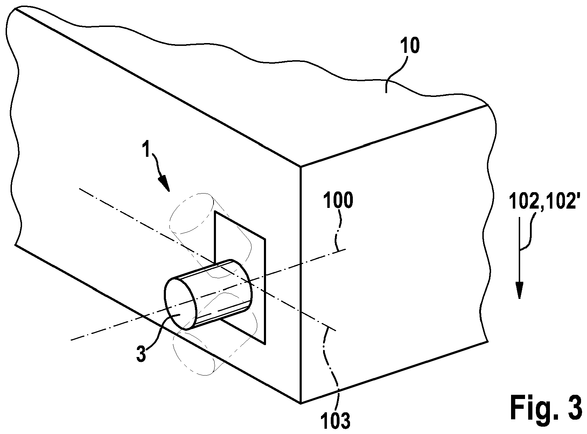

In **Figur 3** ist eine schematische Ansicht einer Bedienvorrichtung 1 gemäß einer dritten Ausführungsform der vorliegenden Erfindung dargestellt. Die dritte Ausführungsform entspricht im Wesentlichen der in Figur 1 illustrierten ersten Ausführungsform, wobei bei der dritten Ausführungsform im Unterschied zur ersten Ausführungsform wiederum ein dreiachsiger Beschleunigungssensor 5 als Sensoreinheit 4 realisiert ist und das Betätigungselement 3 gegenüber dem Basiselement 2 zusätzlich um eine Kippachse 103 kippbar ist. Die Kippachse 103 verläuft beispielsweise zum Schwerefeld 102 und zur Betätigungsachse 100 senkrecht. Die zusätzliche dritte Messachse verläuft parallel zur Betätigungsachse 100, so dass eine Beschleunigung des Betätigungselements 3 entlang der Betätigungsachse 100 aufgrund einer Verkippung des Betätigungselements 3 um die Kippachse 103 detektierbar ist. Auf diese Weise können zwei oder mehr Kippstufen des Betätigungselements 3 erkannt werden, die dann weitere Funktionen der Bedienvorrichtung ermöglichen. Denkbar ist auch, dass eine stufenlose Verkippung um die Kippachse 103 vorgesehen ist.

**Patentansprüche**

1. Bedienvorrichtung (1), insbesondere für ein elektrisches und/oder elektronisches Gerät (10), welche ein Basiselement (2) und ein gegenüber dem Basiselement (2) um eine Betätigungsachse (100) manuell drehbares Betätigungselement (3) aufweist, wobei die Bedienvorrichtung (1) ferner eine Sensoreinheit (4) zur Detektion einer Bewegung des Betätigungselements (3) um die Betätigungsachse (100) aufweist, **dadurch gekennzeichnet, dass** die Sensoreinheit (4) einen Beschleunigungssensor (5) umfasst, wobei der Beschleunigungssensor (5) zur Messung der Schwerebeschleunigung (102') in Abhängigkeit der Bewegung des Betätigungselements (3) konfiguriert ist, wobei die Bedienvorrichtung (1) eine mit dem Beschleunigungssensor (5) gekoppelte Auswerteeinheit (6) aufweist, die zur Bestimmung der Orientierung des Betätigungselements (3) relativ zur Richtung der Schwerebeschleunigung (102') konfiguriert ist, wobei der Beschleunigungssensor (5) einen wenigstens zweiachsigen Beschleunigungssensor (5) umfasst, dessen Sensierachsen in einer zur Betätigungsachse (100) senkrechten Sensierebene (101) verlaufen, wobei die Sensierebene (101) zumindest im Anwendungsfall der Bedienvorrichtung (1) im Wesentlichen parallel zum Schwerefeld (102) verläuft, wobei der Beschleunigungssensor (5) derart drehfest an dem Betätigungselement (3) angeordnet ist, dass bei einer Drehung des Betätigungselements (3) um die Betätigungsachse (100) die Sensierebene (101) um die Betätigungsachse (100) mitgedreht wird.

2. Bedienvorrichtung (1) nach Anspruch 1, wobei die Betätigungsachse (100) hinsichtlich der Sensierebene (101) im Wesentlichen zentral durch den Beschleunigungssensor (5) verläuft.

3. Bedienvorrichtung (1) nach einem der vorhergehenden Ansprüche, wobei die Auswerteeinheit (6) einen Tiefpassfilter zum Filtern von Sensorsignalen des Beschleunigungssensors (5) aufweist.

4. Bedienvorrichtung (1) nach einem der vorhergehenden Ansprüche, wobei das Betätigungselement (3) parallel zur Betätigungsachse (100) gegenüber dem Basiselement (2) manuell translatorisch bewegbar ist und der Beschleunigungssensor (5) einen dreiachsigen Beschleunigungssensor (5) umfasst, wobei mittels einer zur Sensierebene (101) senkrechten weiteren Sensierachse des Beschleunigungssensors (5) eine Beschleunigung des Betätigungselements (3) parallel zur Betätigungsachse (100) detektierbar ist.

**5.** Bedienvorrichtung (1) nach einem der vorhergehenden Ansprüche, wobei das Betätigungselement (3) um eine zur Betätigungsachse (100) und zum Schwerefeld (102) jeweils im Wesentlichen senkrecht verlaufende Kippachse (103) gegenüber dem Basiselement (2) manuell verkippbar ist, wobei der Beschleunigungssensor (5) einen dreiachsigen Beschleunigungssensor (5) zur Vermessung einer Kippbewegung des Betätigungselements (3) um die Kippachse (103) umfasst.

**6.** Verfahren zum Betrieb einer Bedienvorrichtung (1) nach einem der vorhergehenden Ansprüche, **dadurch gekennzeichnet, dass** eine Drehung des Betätigungselements (3) um die Betätigungsachse (100) von dem Beschleunigungssensor (5) detektiert wird, wobei mittels des Beschleunigungssensors (5) die Schwerebeschleunigung (102') gemessen wird und wobei mittels einer Auswerteeinheit die Orientierung des Betätigungselements (3) relativ zur Richtung der Schwerebeschleunigung (102') bestimmt wird.

**7.** Verfahren nach Anspruch 6, wobei mittels des Beschleunigungssensors (5) eine translatorische Bewegung des Betätigungselements (3) parallel zur Betätigungsachse (100) gemessen wird und/oder wobei mittels des Beschleunigungssensors (5) eine Kippbewegung des Betätigungselements (3) um eine zur Betätigungsachse (100) und zur Schwerebeschleunigung (102') jeweils senkrechte Kippachse (103) gemessen wird.

**Claims**

**1.** Control device (1), in particular for an electrical and/or electronic device (10), which has a base element (2) and an actuating element (3) that can be rotated manually with respect to the base element (2) about an actuation axis (100), the control device (1) also having a sensor unit (4) for detecting a movement of the actuating element (3) about the actuation axis (100), **characterized in that** the sensor unit (4) comprises an acceleration sensor (5), wherein the acceleration sensor (5) is configured to measure the gravitational acceleration (102') as a function of the movement of the actuating element (3), wherein the control device (1) has an evaluation unit (6) which is coupled to the acceleration sensor (5) and which is configured to determine the orientation of the actuating element (3) relative to the direction of the gravitational acceleration (102'), wherein the acceleration sensor (5) comprises an at least two-axis acceleration sensor (5), of which the sensing axes extend in a sensing plane (101) perpendicular to the actuation axis (100), wherein, at least when the control device (1) is used, the sensing plane (101) extends substantially parallel to the gravitational field (102), wherein the acceleration sensor (5) is rotationally fixedly arranged on the actuating element (3) in such a way that, during a rotation of the actuating element (3) about the actuation axis (100), the sensing plane (101) is also rotated about the actuation axis (100).

**2.** Control device (1) according to Claim 1, wherein, with respect to the sensing plane (101), the actuation axis (100) extends substantially centrally through the acceleration sensor (5).

**3.** Control device (1) according to one of the preceding claims, wherein the evaluation unit (6) has a low-pass filter for filtering sensor signals from the acceleration sensor (5).

**4.** Control device (1) according to one of the preceding claims, wherein the actuating element (3) can be moved translationally manually with respect to the base element (2), parallel to the actuation axis (100), and the acceleration sensor (5) comprises a three-axis acceleration sensor (5), wherein, by means of a further sensor axis of the acceleration sensor (5) perpendicular to the sensing plane (101), an acceleration of the actuating element (3) parallel to the actuation axis (100) can be detected.

**5.** Control device (1) according to one of the preceding claims, wherein the actuating element (3) can be tilted manually with respect to the base element (2) about a tilt axis (103) extending respectively substantially perpendicular to the actuation axis (100) and to the gravitational field (102), wherein the acceleration sensor (5) comprises a three-axis acceleration sensor (5) for measuring a tilting movement of the actuating element (3) about the tilt axis (103).

**6.** Method for operating a control device (1) according to one of the preceding claims, **characterized in that** a rotation of the actuating element (3) about the actuation axis (100) is detected by the acceleration sensor (5), wherein the gravitational acceleration (102') is measured by means of the acceleration sensor (5), and wherein, by means of an evaluation unit, the orientation of the actuating element (3) relative to the direction of the gravitational acceleration (102') is determined.

**7.** Method according to Claim 6, wherein, by means of the acceleration sensor (5), a translational movement of the actuating element (3) parallel to the actuation axis (100) is measured and/or wherein, by means of the acceleration sensor (5), a tilting movement of the actuating element (3) about a tilt axis (103) respectively perpendicular to the actuation axis (100) and to the gravitational acceleration (102') is measured.

**Revendications**

1. Dispositif de commande (1), en particulier pour un appareil électrique et/ou électronique (10), qui présente un élément de base (2) et un élément d'actionnement (3) pouvant tourner manuellement autour d'un axe d'actionnement (100) par rapport à l'élément de base (2), dans lequel le dispositif de commande (1) présente en outre une unité de détecteur (4) pour la détection d'un mouvement de l'élément d'actionnement (3) autour de l'axe d'actionnement (100), **caractérisé en ce que** l'unité de détecteur (4) comprend un détecteur d'accélération (5), dans lequel le détecteur d'accélération (5) est configuré pour la mesure de l'accélération de gravitation (102') en fonction du mouvement de l'élément d'actionnement (3), dans lequel le dispositif de commande (1) présente une unité d'évaluation (6) couplée au détecteur d'accélération (5), qui est configurée pour la détermination de l'orientation de l'élément d'actionnement (3) par rapport à la direction de l'accélération de gravitation (102'), dans lequel le détecteur d'accélération (5) comprend un détecteur d'accélération à au moins deux axes, dont les axes de détection sont situés dans un plan de détection (101) perpendiculaire à l'axe d'actionnement (6), dans lequel le plan de détection (101) est essentiellement parallèle au champ de gravitation (102) au moins dans le cas d'application du dispositif de commande (1), dans lequel le détecteur d'accélération (5) est calé sur l'élément d'actionnement (3) de telle manière que, lors d'une rotation de l'élément d'actionnement (3) autour de l'axe d'actionnement (100), le plan de détection (101) soit entraîné en rotation autour de l'axe d'actionnement (100).

2. Dispositif de commande (1) selon la revendication 1, dans lequel l'axe d'actionnement (100) s'étend de façon essentiellement centrale à travers le détecteur d'accélération (5) par rapport au plan de détection (101).

3. Dispositif de commande (1) selon l'une quelconque des revendications précédentes, dans lequel l'unité d'évaluation (6) présente un filtre passe-bas pour filtrer des signaux de détecteur du détecteur d'accélération (5).

4. Dispositif de commande (1) selon l'une quelconque des revendications précédentes, dans lequel l'élément d'actionnement (3) est déplaçable manuellement en translation parallèlement à l'axe d'actionnement (100) par rapport à l'élément de base (2) et le détecteur d'accélération (5) comprend un détecteur d'accélération à trois axes (5), dans lequel une accélération de l'élément d'actionnement (3) parallèlement à l'axe d'actionnement (100) peut être détectée au moyen d'un autre axe de détection du détecteur d'accélération (5) perpendiculaire au plan de détection (101).

5. Dispositif de commande (1) selon l'une quelconque des revendications précédentes, dans lequel l'élément d'actionnement (3) peut être basculé manuellement par rapport à l'élément de base (2) autour d'un axe de basculement (103) essentiellement perpendiculaire respectivement à l'axe d'actionnement (100) et au champ de gravitation (102), dans lequel le détecteur d'accélération (5) comprend un détecteur d'accélération à trois axes (5) pour la mesure d'un mouvement de basculement de l'élément d'actionnement (3) autour de l'axe de basculement (103).

6. Procédé d'utilisation d'un dispositif de commande (1) selon l'une quelconque des revendications précédentes, **caractérisé en ce que** l'on détecte une rotation de l'élément d'actionnement (3) autour de l'axe d'actionnement (100) au moyen du détecteur d'accélération (5), dans lequel on mesure l'accélération de gravitation (102') au moyen du détecteur d'accélération (5) et dans lequel on détermine l'orientation de l'élément d'actionnement (3) par rapport à la direction de l'accélération de gravitation (102') au moyen d'une unité d'évaluation.

7. Procédé selon la revendication 6, dans lequel on mesure au moyen du détecteur d'accélération (5) un mouvement de translation de l'élément d'actionnement (3) parallèlement à l'axe d'actionnement (100) et/ou dans lequel on mesure au moyen du détecteur d'accélération (5) un mouvement de basculement de l'élément d'actionnement (3) autour d'un axe de basculement (103) respectivement perpendiculaire à l'axe d'actionnement (100) et à l'accélération de gravitation (102').

**Fig. 1**

**Fig. 2**

Fig. 3

**IN DER BESCHREIBUNG AUFGEFÜHRTE DOKUMENTE**

**In der Beschreibung aufgeführte Patentdokumente**

- JP 2008277213 A
- EP 0842822 A2